# EUROPEAN PATENT SPECIFICATION

(11) **EP 0 885 539 B1**
(45) Date of publication and mention of the grant of the patent: **09.06.2004**
(21) Application number: 97904710.7
(22) Date of filing: 11.02.1997
(51) Int. Cl.: H04Q 7/36, H04Q 7/38

(54) **DEVICE AND METHOD FOR DYNAMIC OPTIMIZATION OF THE TRANSMISSION CAPACITY IN A CELLULAR RADIO COMMUNICATIONS SYSTEM**
EINRICHTUNG UND VERFAHREN ZUR DYNAMISCHEN OPTIMIERUNG DER ÜBERTRAGUNGSKAPAZITÄT EINES ZELLULAREN FUNKKOMMUNIKATIONSSYSTEMS
DISPOSITIF ET PROCEDE D'OPTIMISATION DYNAMIQUE DE LA CAPACITE DE TRANSMISSION DANS UN SYSTEME DE COMMUNICATION RADIO CELLULAIRE

(30) Priority: 13.03.1996 SE 9600961
(43) Date of publication of application: 23.12.1998
(73) Proprietor: TELIA AB, 123 86 Farsta (SE)
(72) Inventor: WICKMAN, Johan, S-237 35 Bjärred (SE); WALTER, Patrik, S-217 53 Malmö (SE)
(74) Representative: Akerman, Marten Lennart
(86) International application number: PCT/SE1997/000204
(87) International publication number: WO 1997/034435

(56) References cited:
- WO-A-90/03071
- WO-A-96/00484
- WO-A-96/09490
- WO-A-96/13951
- US-A- 5 161 248

## Description

### TECHNICAL FIELD

The present invention relates to a new device and method at a cellular radio communications system including means for mobile or semi-stationary communication which utilizes antenna systems with directable antenna lobes and which makes possible an optimal utilization of the available transmission capacity between the in said system included base stations respective mobile units so that a capacity efficient utilization with minimal interference is achieved.

### PRIOR ART

In cellular radio systems, preferably digital radio systems, it is previously known for instance by the patent document GB, A, 2 281 007 to utilize an antenna arrangement which includes means to recognize unique identity signals which are incorporated in the signal message and that the antenna arrangement includes means for recognition of said identity signal so that the antenna arrangement can differentiate between unwanted and wanted signals. The system, however, does not predict the movement of the mobile unit with the aim to optimize the transmission capacity of the system with a minimum of interference and so that the same radio channel can be utilized by the same base station at the same point of time and in different geographical directions.

Another document WO, A1, 95/09 490 relates to a radio system where the base stations utilize two different types of radio channels where one type of channel which is omnidirectional is used for instance at set up of calls, and where the other type of.channel, which is used for the ordinary speech traffic, utilizes a narrow directable antenna lobe. The document describes a method to improve the capacity in a radio system.

Further, a method is previously known by the patent document U, A, 5 161 248 to predict antenna lobes in a cellular wireless communications system. The system, however, is a satellite based system and not a ground based one, so the antenna lobes move with a constant speed in relation to the user. The antenna lobes in this system consequently are not directable in the sense which the antenna elements of a ground based system are directable.

The document WO, A1, 96/00 484 discloses a method at a semi-stationary or mobile cellular radio communications system which utilizes antenna systems including directable antenna lobes to dynamically optimize the transmission capacity and reduce the influence of interference between the radio channels at transmission of signals between transmitting and receiving equipments in the system. The document discloses prediction of deterioration in transmission quality e.g. that it is possible to detect that two mobile stations are moving close to each other. However, the document does neither disclose short time prediction of the geographical movements of a mobile unit based on regularly determinations of the actual position of the mobile unit nor how such predictions of geographical movements can be used to optimize the transmission capacity and reduce the influence of interference.

By the presented documents there are consequently previously known cellular radio communications systems which include base stations equipped with special antenna arrangements which allow that communication can be made from and to all mobile units wich are included in the system via narrow, directable and overlapping antenna lobes.

What on the other hand is not previously known and which consequently constitutes a new device and method is to have possibility, in a ground based cellular radio commmunications system for mobile or semi-stationary commmunication and which includes antenna systems with directable antenna lobes, to short time predict the geographical movements of one or more mobile units with the aim to control the antenna system or the symbol speed so that the same radio channel can be utilized by the same base station at the same point of time in different directions, so that maximum transmission capacity can be achieved at a minimum of interference.

### DESCRIPTION OF THE INVENTION

### TECHNICAL PROBLEM

The telecommunications services of the future will require an ever increasing frequency range, i.e. bandwidth. At the same time the need for terminal mobility will, with great probability, further increase in comparison with the mobility possibilities of today. Terminal mobility normally takes for granted that radio communication is utilized as transmission medium for transmission of information between two or more in the system included units. The available frequency spectrum for such radio communication, however, is a limited resource, so the allocation of this resource will necessarily be limiting for the new systems or standards which at first hand are intended for capacity demanding applications or services. The limitation of the frequency spectrum consequently results in that the use of it has to be extremely efficient.

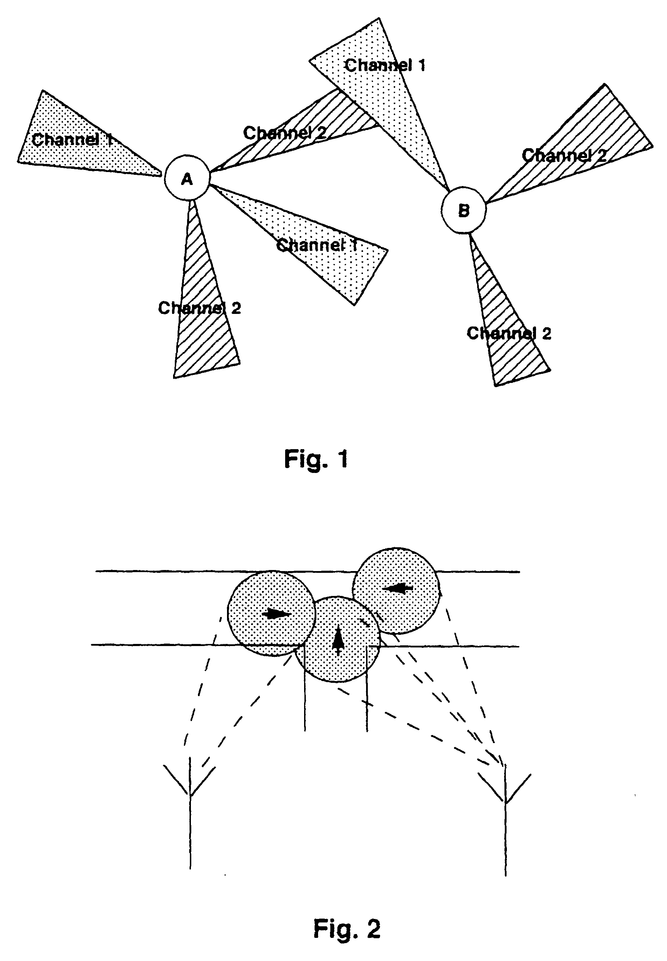

One way to improve spectrum efficiency is, in base stations, to utilize a number of directable antennas. By the utilization of said antennas in a radio based communications system, a comparatively narrow lobe will be created between the base station and mobile unit. This means that the same radio channel, i.e. the same frequency (FDMA), time slot (TDMA) or distribution code (CDMA), can be utilized by the same base station in one or more other directions. In that way can, in for instance an FDMA-system, one and the same frequency be utilized a multiple of times in the same cell, see Figure 1. The same frequency also can be utilized in an adjacent cell if this lobe is not directed towards the same point, or overlaps the point which the lobe from the adjacent base station transmits. This procedure is comparatively easy to introduce in a system with fixed receiver units because one then knows, and can assume in ones calculations of necessary radio resources, that the receiving units will not move.

Also in a radio communications system with mobile units the procedure with directed antenna lobes can be used. The antenna lobes, however, must be directable so that the lobe follows the geographical move of the mobile unit. One problem related to the management of the radio resources, however, will arise. When mobiles move, there is a risk that antenna lobes from adjacent base stations will cross each other over the common coverage areas of the lobes, see Figure 2. If the base stations utilize the same radio channel, in certain cases also applicable to adjacent channels, this may result in that sufficient interference will occur so that a channel will be hampered by interference. The invention intends to solve this problem.

One method to reduce the demand for spectrum efficiency can be the use of very high frequency bands, because one then can find larger available frequency spectra for the system in question. However, problems then will arise to get sufficient radio coverage for mobile systems. This, however, can be solved in principle by the utilization of directable direction antennas to improve the radio covering area. One, however, for these cases must be able to predict occurring channel changes, beacuse these occur faster at higher frequency bands. In other case one risks not to be able to perform change of channel, alternatively station, fast enough to maintain wanted communication. The invention also will solve this problem.

A technology at transmission of signals in a radio based communications system is constituted, during one and the same communications session, by dynamically varying the modulation level, so that one by that during most of the time can use a considerably higher data rate than if one, as conventionally, constantly dimensions the modulation level according to "worst case". However, also with this technology there will arise problems to sufficiently fast get to know when one shall change said modulation level. The invention also will solve this problem.

### THE SOLUTION

What principally can be regarded as characteristic of the invention is that it utilizes short-time prediction of the movement of a mobile with the aim to control existing antenna system and/or symbol speed so that maximum capacity and minimal interference is achieved. Another characteristic is that the invention performs actual determinations of position of the mobile's position regularly by utilization of a previously known method, such as for instance GPS or by means of principles according to the patent SE 466 376 or by measuring of angles and propagation time displacement in the base station when directional antennas are used.

In one embodiment of the idea of invention measurements of the propagation time delay between base station and mobile unit is performed to calculate the distance between these. The measured value is after that used for determination of position of the mobile unit.

In one more embodiment of the idea of invention directional information to the mobile in relation to the base station in question from its directable antenna system is used. This information is utilized for determination of position of the mobile together with other technologies, for instance those which have been described previously.

The invention performs prediction of the mobile's position between the actual determinations of position. The prediction further can utilize road maps or corresponding information which is stored in the base stations or their control units to facilitate the possibility to predict the movements of the mobile.

In one further embodiment of the idea of invention distributed control and supervision units are used instead of a central control unit. This results in that signalling must be performed between the base units so that these all the time are kept updated about which channels and which squares that are allocated. This solution, however, is more expensive since it for instance requires more signalling between existing units than the centrally located control unit. However, it is not impossible that future technical solutions result in that distributed control units will be of interest.

### ADVANTAGES

Previously known technology for mobile communication utilizes in relation to the present invention comparatively large margins against interference and in addition to that some form of channel encoding. These previously known technologies, however, will not be sufficient for bandwidth demanding wireless applications, especially as previous known technology does not utilize prediction, but rather previously measured channel information for, for instance, determination of channel selection.

The condition for broadband applications in cellular wireless systems therefore will increase dramatically if one by utilization of present invention can predict the movement of the mobile unit and accessible radio channels, and by that momentarily use optimal channel and data rate for transmission of signals between a transmitting and receiving equipment in said system.

Since future telecommunications services often will be very bandwidth demanding, it is a big advantage if the same channels also can be used in adjacent cells. This is possible by means of directed antenna lobes in combination with the present invention so that interference is avoided or its influence on the transmission can be minimized.

The invention can be implemented in essentially all cellular radio communications systems, the signal transmission of which requires large bandwidth and which for instance utilizes the communication for, for instance, mobile multimedia applications.

### DESCRIPTION OF THE DRAWINGS

One at present suggested embodiment of a device and method which shows the for the invention significant characteristics is described below with references to enclosed drawings, where
Figure 1 shows how the same radio channel can be used a multiple of times by the same base station and also by adjacent base stations, and
Figure 2 shows an example of when the from the base stations transmitted antenna lobes cross each other, at which strong interference occurs, and
Figure 3 shows a mobile unit which is on the way to move from square A to square B. A check is then performed so that not any other mobile with the same, or adjacent, interfering channel is in square B, and
Figure 4 shows a flow chart for the control which must be made at change of square. The flow chart illustrates what happens when a central control unit is utilized.

- A:: The base station predicts that MSx soon will change from square A to square B.
- B:: BS transmits inquiry to the control unit whether square B is occupied for the channel which MSx is using.
- C:: Obtains answer on the inquiry from the control unit.
- D:: Measure: Change channel or change modulation level.
- E:: Receives inquiry from a BS if a certain channel in a certain square is free or occupied.
- F:: Checks if a certain channel in a certain square is occupied.
- G:: Selects a channel which an MS is allowed to use in a certain square.
- H:: Signals to BS: YES/NO: At YES, also measure is indicated, change of channel or change of modulation level.

### DETAILED DESCRIPTION OF AN EMBODIMENT OF THE PRESENT INVENTION

The present invention is above all applicable to such cellular commmunications systems for mobile and/or semi-stationary communication which utilize antenna systems comprising directable antenna lobes.

The invention is based on a device comprising devices for short time prediction of the movements of a mobile with the aim to control existing antenna system and/or symbol speed so that maximum transmission capacity and minimal interference is achieved. Ground-based mobile terminals which move fast are often motorised or used in connection with train, i.e. road- or railbound. This means that it is possible, with comparatively great certainty, to perform predictions which have short validity in time regarding how the vehicle will move. Changes of the speed of the mobile, i.e. speed and direction, are, seen in the short run, slow, which means that the prediction error during a short space of time with great probability will be small.

The invention can be realized as below.

One at a mobile or base unit arranged device performs actual determinations of positions of the mobile's position regularly by means of utilization of some external unit such as, for instance, GPS (Global Positioning System) or by means of utilization of principles according to the Swedish patent 466 376 or corresponding positioning system. Alternatively, the determination of position can be performed by measuring of angles and propagation time delay in the base station when directional antennas are used.

Mobile or base unit is allocated devices which perform measurements of propagation time delay between base and mobile to calculate the distance between these, and the distance result is used for determination of position of the mobile unit. Further, directional information to the mobile in relation to the base station in question is utilized from its directable antenna system. The directional information is used for the determination of position of the mobile together with the technologies which have been mentioned above.

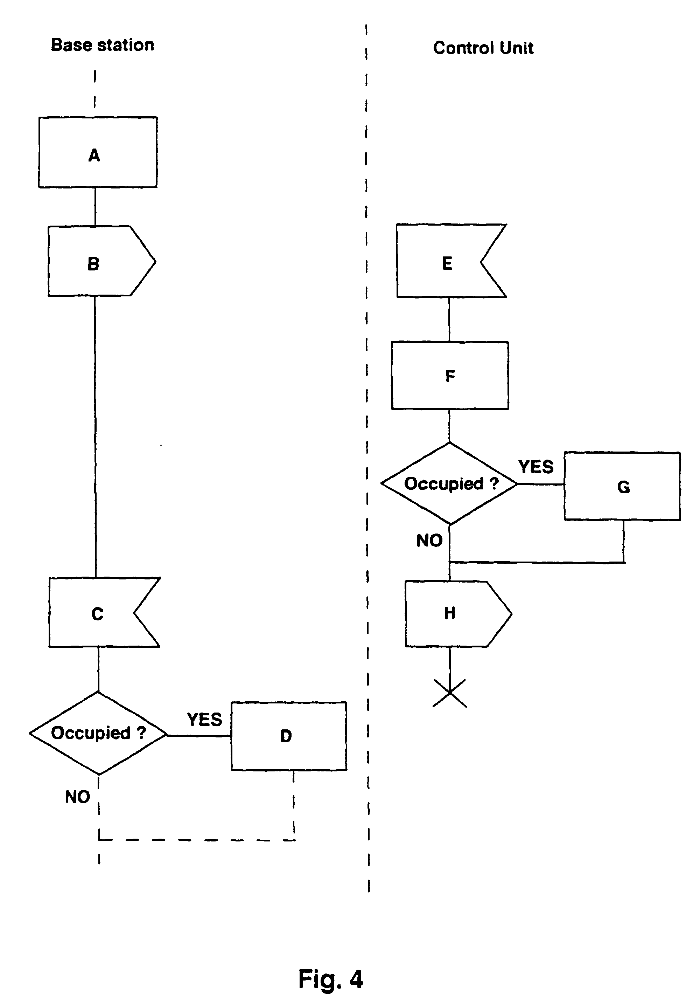

Device at mobile and base unit performs, by means of for that intended devices, prediction of the mobile's position between the actual determinations of position which have been described above, see Figur 4.

The prediction can utilize road maps or corresponding information in the base stations or their control units to facilitate the possibility to predict the movement of the mobile. The mobile often is located in some kind of vehicle such as, for instance, car or train. These types of vehicles move in patterns which in many cases can be repeated. Prediction of the movements of the mobile also can be performed in such a way that the system presumes that the speed is always constant between uncorrected predictions. Changes in speed consequently results in prediction error for which correction is made. Alternatively, prediction can be made according to the assumption that the change of speed is substantially constant.

The invention makes use of prediction of the movement of the mobile to make it possible to calculate when the case with crossing antenna lobes occurs. With crossing antenna lobes is meant such a situation where interference occurs by antenna lobes from adjacent base stations crossing each other, see Figure 2, over a common coverage area within which a mobile unit which is active towards one of concerned base stations exists.
By interference is meant such traffic from other user with the same or adjacent channel which interferes with wanted communication.

The invention utilizes the prediction of crossing antenna lobes by, in time, before crossing antenna lobes occur, taking some kind of preventive step. One example of preventive step is to perform change of channel so that crossing antenna lobes do not utilize interfering channels. Another example is to reduce the data rate of the carrier or carriers in question by reducing the modulation level, so that a more robust radio channel is achieved. The latter method is especially suitable in situations when one predicts that the interference between two or more channels will not be total.

The invention utilizes the prediction of the movement of the mobile by thereby also making it possible to predict situations with low signal strength or high interference. An example of a situation with high interference has previously been described above, crossing antenna lobes. But also low signal strength may be useful to predict in order to make it possible to reduce modulation level, change channel or change base station. This is very useful, especially to have possibility to predict situations where the signal strength will fall rapidly, for instance when the mobile moves round street corners or at entrances to tunnels etc.

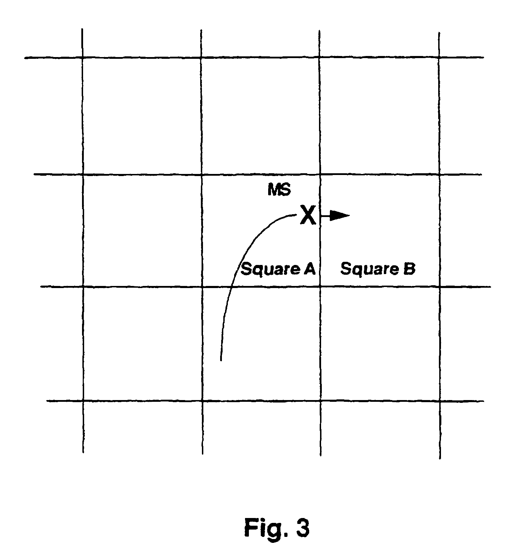

The mobile or base unit has communication between adjacent base stations, directly or via a control unit, to obtain information so that for instance crossing antenna lobes can be predicted and avoided. One example of embodiment is that the geographical surface is divided into a number of small square units, see Figure 3. When a mobile is approaching a change of square, then its base station has to check with the control unit, see Figure 4, that the new square is not, or will not be, occupied for the channel in question. If that is the case, change of channel is suggested, alternatively reduction of the modulation level or some other step to avoid or reduce the interference. The change of channel or level of modulation is suggested in good time before the change of square of the mobile occurs with regard to the time which is necessary for change of channel/modulation in relation to the current speed of the mobile, and the inaccuracy which exists for the determination of position for the direction and distance in question. The technology also can be used in a similar way at establishing/setting up of a new connection.

The invention is not restricted to the above as example presented embodiment but may in addition be subject to modifications within the frame of the following patent claims and the idea of invention.

## Claims

1. Device at a semi-stationary or mobile cellular radio communications system, arranged to utilize antenna systems including directable antenna lobes, to dynamically optimize the transmission capacity and reduce the influence of interference between the radio channels at transmission of signals between transmitting and receiving equipments in said system, **characterized in that** a mobile unit or a base unit belonging to a cellular radio system is allocated a device arranged to regularly perform short time predictions of the geographical movements of a mobile unit based on regularly determinations of the actual position of the mobile unit, that the device is arranged to use the prediction of the geographical movements to control the to the base station arranged antenna system, that said device is arranged to use the prediction of the geographical movements of the mobile unit to calculate when a situation with crossing antenna lobes occurs, after which suitable selection of channel with relation to the interference risk is calculated, that said device is arranged to control in the base station allocated devices to execute necessary changes of radio channel or level of modulation.

2. Device according to claim 1,
**characterized in that** that the digital radio communications system is arranged to transmit information in time slots divided into time frames, and that selected time slots are arranged for transmission of said information to, respective from, a transmitting and receiving unit in said system.

3. Device according to claim 1,
**characterized in that** the radio communications system is arranged to transmit information continuously via one or more frequency bands, and that selected frequency bands are arranged for transmission of said information to, respective from, a transmitting and receiving unit in said system.

4. Device according to claim 1,
**characterized in that** the radio communications system is arranged to transmit information over a common carrier including user unique codes, and that the carrier is arranged for transmission of said information to, respective from, one in said system transmitting and receiving equipment.

5. Device according to any of the previous claims,
**characterized in that** the prediction function is arranged to influence the allocation of radio channels depending on the interference condition in the concerned area within which the transmitting and receiving equipment are.

6. Device according to any of the previous claims,
**characterized in that** said radio communications system is arranged with one or more units for reception and transmission of information, which can be called from, respective can call, one in the system included mobile unit or fixed unit.

7. Device according to any of the previous claims,
**characterized in that** said device is arranged to keep up communication between adjacent base stations to get necessary information so that crossing antenna lobes from said base stations can be predicted and avoided.

8. Device according to any of the previous claims,
**characterized in that** said device is arranged to utilize the prediction of the geographical movement of the mobile by **in that** way also making it possible to predict situations with low signal strength or high interference.

9. Device according to any of the previous claims,
**characterized in that** said device is arranged to utilize the prediction of crossing antenna lobes by, in time before the situation with crossing antenna lobes occurs, taking preventive steps by performing change of channel so that crossing antenna lobes do not utilize interfering channels.

10. Device according to any of the previous claims,
**characterized in that** said device is arranged to utilize prediction of crossing antenna lobes by, before the situation with crossing antenna lobes occurs, reducing the data rate of the carrier or carriers in question by reducing the level of modulation.

11. Device according to any of the previous claims,
**characterized in that** said device is arranged to perform measurements of propagation time delay between the base unit and mobile unit in order to calculate the distance between these.

12. Device according to any of the previous claims,
**characterized in that** said device is arranged to utilize directional information to the mobile in relation to the base station in question from its directable antenna system for determination of the position of the mobile.

13. Method at a semi-stationary or mobile cellular radio communications system which utilizes antenna systems including directable antenna lobes to dynamically optimize the transmission capacity and reduce the influence of interference between the radio channels at transmission of signals between transmitting and receiving equipments in said system, **characterized in that** a mobile unit or a base unit belonging to a cellular radio system is allocated a device which regularly performs short time prediction of the geographical movements of a mobile unit based on regularly determinations of the actual position of the mobile unit, that the prediction of the geographical movement is used to control the to the base station arranged antenna system, that said device uses prediction of the geographical movement of the mobile unit to calculate when a situation with crossing antenna lobes occurs, after which suitable selection of channel with relation to the risk of interference is calculated, that said device controls in the base station allocated devices to execute necessary changes of radio channel or level of modulation.

## Patentansprüche

1. Vorrichtung bei einem halbstationären oder mobilen zellularen Funkkommunikationssystem, die angeordnet ist, um Antennensysteme zu verwenden, die richtbare Antennenkeulen haben, zum dynamischen Optimieren der Sendekapazität und Verringern des Einflusses der Interferenz zwischen den Funkkanälen bei der Sendung der Signale zwischen der sendenden und der empfangenden Ausrüstung in dem System, **dadurch gekennzeichnet, dass** eine mobile Einheit oder eine Basiseinheit, die zu einem zellularen Funksystem gehört, einer Vorrichtung zugewiesen ist, die ständig Kurzzeitvorhersagen der geografischen Bewegungen einer mobilen Einheit basierend auf ständigen Bestimmungen der tatsächlichen Position der mobilen Einheit durchführt, dass die Vorrichtung so angeordnet ist, dass sie die Vorhersagen der geografischen Bewegungen zur Steuerung des an der Basisstation angeordneten Antennensystems verwendet, dass die Vorrichtung so angeordnet ist, dass sie die Vorhersagen der geografischen Bewegungen der Mobileinheit zum Berechnen verwendet, wenn eine Situation mit sich kreuzenden Antennenkeulen auftritt, wonach eine geeignete Wahl des Kanals mit Bezug auf das Interferenzrisiko berechnet wird, dass die Vorrichtung angeordnet ist, um in der Basisstation zugewiesene Vorrichtungen zu steuern, um die notwendigen Änderungen des Funkkanals oder des Modulationspegels durchzuführen.

2. Vorrichtung nach Anspruch 1, **dadurch gekennzeichnet, dass** das digitale Funkkommunikationssystem so angeordnet ist, dass es Informationen in Zeitschlitzen, die in Zeitrahmen unterteilt sind, sendet, und dass gewählte Zeitschlitze für die Sendung dieser Information zur bzw. von einer Sende- bzw. Empfangseinheit in dem System, angeordnet sind.

3. Vorrichtung nach Anspruch 1, **dadurch gekennzeichnet, dass** das Funkkommunikationssystem so angeordnet ist, dass es Information kontinuierlich über ein oder mehrere Frequenzbänder sendet, und dass gewählte Frequenzbänder zum Senden der Information zu bzw. von einer Sende- bzw. Empfanseinheit in dem System angeordnet sind.

4. Vorrichtung nach Anspruch 1, **dadurch gekennzeichnet, dass** das Funkkommunikationssystem so angeordnet ist, dass es Information über einen gemeinsamen Träger, der Benutzer-Unique-Codes enthält, sendet, und dass der Träger für die Sendung der Information zu bzw. von einer Ausrüstung in der Systemsende- bzw. Empfangsausrüstung angeordnet ist.

5. Vorrichtung nach einem der vorstehenden Ansprüche,
**dadurch gekennzeichnet, dass** die Vorhersagefunktion angeordnet ist, um die Zuweisung der Funkkanäle zu beeinflussen in Abhängigkeit von der Interferenzbedingung in dem betreffenden Bereich, innerhalb welchem sich die Sende- und Empfangsausrüstung befindet.

6. Vorrichtung nach einem der vorstehenden Ansprüche,
**dadurch gekennzeichnet, dass** das Funkkommunikationssystem mit einer oder mehreren Einheiten zum Empfang und zur Sendung von Information angeordnet ist, die eine Einheit in dem System, das eine mobile Einheit oder feste Einheit enthält, anrufen können oder von dieser angerufen werden können.

7. Vorrichtung nach einem der vorstehenden Ansprüche,
**dadurch gekennzeichnet, dass** die Vorrichtung so angeordnet ist, dass sie die Kommunikation zwischen benachbarten Basisstationen hält, um notwendige Informationen zu erhalten, sodass sich kreuzende Antennenkeulen von den Basisstationen vorhergesagt und vermieden werden können.

8. Vorrichtung nach einem der vorstehenden Ansprüche,
**dadurch gekennzeichnet, dass** die Vorrichtung angeordnet ist, um die Vorhersage der geografischen Bewegung der mobilen Einheit nebenbei auch so verwenden kann, dass es möglich ist, die Situationen mit geringer Signalstärke oder hoher Interferenz vorherzusagen.

9. Vorrichtung nach einem der vorstehenden Ansprüche,
**dadurch gekennzeichnet, dass** die Vorrichtung so angeordnet ist, dass sie die Vorhersage der sich kreuzenden Antennenkeulen rechtzeitig bevor die Situation mit den kreuzenden Antennenkeulen auftritt, benutzt und vorsorgliche Schritte durch Durchführen einer Kanaländerung unternimmt, sodass sich kreuzende Antennenkeulen keine interferierenden Kanäle verwenden.

10. Vorrichtung nach einem der vorstehenden Ansprüche,
**dadurch gekennzeichnet, dass** die Vorrichtung so angeordnet ist, dass sie die Vorhersage von sich kreuzenden Antennenkeulen verwendet, bevor die Situation mit sich kreuzenden Antennenkeulen auftritt, wodurch die Datenrate des in Frage stehenden Trägers oder der Träger durch eine Verringerung des Modulationspegels verringert wird.

11. Vorrichtung nach einem der vorstehenden Ansprüche,
**dadurch gekennzeichnet, dass** die Vorrichtung angeordnet ist, um Messungen der Ausbreitungszeitverzögerung zwischen der Basiseinheit und der Mobileinheit durchzuführen, um den Abstand zwischen diesen zu berechnen.

12. Vorrichtung nach einem der vorstehenden Ansprüche,
**dadurch gekennzeichnet, dass** die Vorrichtung angeordnet ist, um Richtungsinformation zur Mobileinheit in Relation zu der in Frage stehenden Basisstation aus ihrem richtbaren Antennensystem zu verwenden, um die Position der Mobileinheit zu bestimmen.

13. Verfahren bei einem halbstationären oder mobilen, zellularen Funkkommunikationssystem, welches Antennensysteme verwendet, die richtbare Antennenkeulen haben, zum dynamischen Optimieren der Sendekapazität und Verringern des Einflusses der Interferenz zwischen den Funkkanälen beim Senden von Signalen zwischen der sendenden und empfangenden Ausrüstung in diesem System, **dadurch gekennzeichnet, dass** eine mobile Einheit oder eine Basiseinheit, die zu einem zellularen Funksystem gehören, einer Vorrichtung zugeordnet ist, die ständig Kurzzeitvorhersagen der geografischen Bewegungen einer Mobileinheit basierend auf ständigen Bestimmungen der tatsächlichen Position der Mobileinheit durchführt, dass die Vorhersage der geografischen Bewegung dazu verwendet wird, das zur Basisstation angeordnete Antennensystem zu steuern, dass die Vorrichtung die Vorhersage der geografischen Bewegung der Mobileinheit dazu verwendet, eine Berechnung bei Auftreten einer Situation mit sich kreuzenden Antennenkeulen durchzuführen, wonach eine geeignete Wahl des Kanals mit Bezug auf das Risiko der Interferenz berechnet wird, dass die Vorrichtung in der Basisstation zugeordnete Vorrichtungen steuert, um die notwendigen Änderungen des Funkkanals oder des Modulationspegels durchzuführen.

## Revendications

1. Dispositif dans un système de communication semi-stationnaire ou radio-cellulaire mobile, agencé pour utiliser des systèmes d'antennes comprenant des lobes d'antennes directionnelles pour optimiser de façon dynamique la capacité de transmission et réduire l'influence de l'interférence entre les canaux radio dans la transmission de signaux entre des équipements de transmission et de réception dans ledit système, **caractérisé en ce que** l'on attribue à une unité mobile ou à une unité de base appartenant à un système radio-cellulaire un dispositif agencé pour effectuer régulièrement des prédictions à court terme des déplacements géographiques d'une unité mobile, en se basant sur des déterminations régulières de la position effective de l'unité mobile, **en ce que** le dispositif est agencé pour utiliser la prédiction des déplacements géographiques pour commander le système d'antennes agencé dans la station de base, **en ce que** ledit dispositif est agencé pour utiliser la prédiction des déplacements géographiques de l'unité mobile pour calculer l'occurrence d'une situation de croisement de lobes d'antennes, après quoi une sélection appropriée de bandes de fréquences est calculée en fonction du risque d'interférences, **en ce que** ledit dispositif est agencé pour exécuter les modifications nécessaires de canal radio ou de niveau de modulation.

2. Dispositif selon la revendication 1,
**caractérisé en ce que** le système de communication radio-numérique est agencé pour transmettre des informations dans des intervalles de temps divisés en séquences temporelles et **en ce que** les intervalles de temps choisis sont agencés pour la transmission desdites informations vers ou respectivement à partir d'une unité de transmission et de réception dans ledit système.

3. Dispositif selon la revendication 1,
**caractérisé en ce que** le système de radio-communication est agencé pour transmettre continuellement des informations par l'intermédiaire d'une ou de plusieurs bandes de fréquences et **en ce que** les bandes de fréquences choisies sont agencées pour la transmission desdites informations, respectivement et à partir d'une unité de transmission et de réception dans ledit système.

4. Dispositif selon la revendication 1,
**caractérisé en ce que** le système de radio-communication est agencé pour transmettre des informations sur une fréquence porteuse commune comprenant des codes uniques d'utilisateur et **en ce que** la fréquence porteuse est agencée pour la transmission desdites informations respectivement à l'un et à partir d'un équipement dans ledit système de transmission et de réception.

5. Dispositif selon l'une quelconque des revendications précédentes,
**caractérisé en ce que** la fonction de prédiction est agencée pour influencer l'attribution des canaux radio suivant la condition d'interférence dans la zone concernée à l'intérieur de laquelle se trouve l'équipement de transmission et de réception.

6. Dispositif selon l'une quelconque des revendications précédentes,
**caractérisé en ce que** ledit système de radio-communication comporte une ou plusieurs unités de réception et de transmission d'informations qui peuvent respectivement être appelées, et appeler une unité mobile ou une unité fixe faisant partie du système.

7. Dispositif selon l'une quelconque des revendications précédentes,
**caractérisé en ce que** ledit dispositif est agencé pour entretenir une communication entre des stations de base adjacentes afin d'obtenir les informations nécessaires de sorte que les croisements des lobes d'antennes depuis lesdites stations de base puissent être prédits et évités.

8. Dispositif selon l'une quelconque des revendications précédentes,
**caractérisé en ce que** ledit dispositif est agencé pour utiliser la prédiction du déplacement géographique du mobile, au moyen de laquelle est ainsi rendue possible la prédiction de situations à faibles signaux ou à interférence élevée.

9. Dispositif selon l'une quelconque des revendications précédentes,
**caractérisé en ce que** ledit dispositif est agencé pour utiliser la prédiction de croisement de lobes d'antennes, au moyen de laquelle, avant l'occurrence de la situation correspondant au croisement de lobes d'antennes, des mesures préventives sont prises en effectuant un changement de canal de sorte que le croisement des lobes d'antennes n'utilise pas des canaux en interférence.

10. Dispositif selon l'une quelconque des revendications précédentes,
**caractérisé en ce que** ledit dispositif est agencé pour utiliser la prédiction de croisement de lobes d'antennes au moyen de laquelle, avant l'occurrence d'une situation correspondant au croisement de lobes d'antennes, le débit des données de la fréquence ou des fréquences porteuses considérées est réduit en réduisant le niveau de la modulation.

11. Dispositif selon l'une quelconque des revendications précédentes,
**caractérisé en ce que** ledit dispositif est agencé pour effectuer des mesures de retard de propagation entre l'unité de base et l'unité mobile pour calculer la distance entre celles-ci.

12. Dispositif selon l'une quelconque des revendications précédentes,
**caractérisé en ce que** ledit dispositif est agencé pour utiliser une information directionnelle vers le mobile en relation avec la station de base considérée à partir de son système d'antennes directionnelles pour déterminer la position du mobile.

13. Procédé dans un système de communication semi-stationnaire ou radio-cellulaire mobile qui utilise des systèmes d'antennes comprenant des lobes d'antennes directionnelles pour l'optimisation dynamique de la capacité de transmission et la réduction de l'influence de l'interférence entre les canaux radio sur la transmission de signaux entre des équipements de transmission et de réception dans ledit système, **caractérisé en ce qu'**un dispositif est attribué à une unité mobile ou à une unité de base appartenant à un système radio-cellulaire, qui effectue régulièrement une prédiction à court terme des déplacements géographiques d'une unité mobile, en se basant sur des déterminations régulières de la position effective de l'unité mobile, **en ce que** la prédiction du déplacement géographique est utilisée pour commander le système d'antennes agencé dans la station de base, **en ce que** ledit dispositif utilise la prédiction du déplacement géographique de l'unité mobile pour calculer l'occurrence d'une situation correspondant à un croisement de lobes d'antennes, après quoi, la sélection appropriée du canal en fonction du risque d'interférences est calculée, **en ce que** ledit dispositif commande les dispositifs attribués à la station de base pour exécuter les changements nécessaires de canal radio ou de niveau de modulation.
